# EUROPEAN PATENT APPLICATION

(11) **EP 3 511 207 A1**
(43) Date of publication of application: **17.07.2019**
(21) Application number: 18213951.9
(22) Date of filing: 19.12.2018
(51) Int. Cl.: B60R 16/03, H02J 7/00, H02J 7/35

(54) **CONTROL DEVICE FOR VEHICLE AND CONTROL METHOD**

(30) Priority: 10.01.2018 JP 2018001967
(71) Applicant: TOYOTA JIDOSHA KABUSHIKI KAISHA, Toyota-shi, Aichi-ken, 471-8571 (JP)
(72) Inventor: NAKADO, Takashi, Toyota-shi, Aichi-ken,, 471-8571 (JP)
(74) Representative: Kuhnen & Wacker Patent- und Rechtsanwaltsbüro PartG mbB

(57) **Abstract**

A control device (20) for a vehicle controls an operation of a solar power generation device (10) mounted in the vehicle. The control device (20) includes an acquisition controller (21) configured to acquire a sunset time and a sunrise time at a current position of the vehicle, and an operation controller (22) configured to switch an operation mode of the solar power generation device (10) between a wakeup mode and a sleep mode having less power consumption of the solar power generation device (10) than in the wakeup mode. The operation controller (22) is configured to switch from the sleep mode to the wakeup mode based on the sunset time and the sunrise time.

## Description

### BACKGROUND OF THE INVENTION

### 1. Field of the Invention

The present invention relates to a control device for a vehicle that controls an operation of a solar power generation device mounted in the vehicle and a control method that is executed by the control device.

### 2. Description of Related Art

Japanese Unexamined Patent Application Publication No. 2015-002640 (JP 2015-002640 A) discloses a solar power generation system that appropriately switches start/stop (wakeup/sleep) of the system based on generated electric power of a solar panel to efficiently store the generated electric power of the solar panel in a battery.

### SUMMARY OF THE INVENTION

In the solar power generation system described in JP 2015-002640 A, when the sleep mode in which the generated electric power of the solar panel becomes less than a predetermined value due to a decrease in amount of solar radiation and the storage of electric power in the battery is stopped is executed, since the storage of electric power in the battery can be restarted quickly when the amount of solar radiation is recovered, control for switching to the wakeup mode regularly and monitoring whether or not the generated electric power of the solar panel does not become equal to or greater than the predetermined value is performed. For this reason, electric power for switching from the sleep mode to the wakeup mode in the solar power generation system may be consumed needlessly.

The invention provides a control device and a control method capable of suppressing power consumption with switching from a sleep mode to a wakeup mode in a solar power generation system.

A first aspect of the invention relates to a control device for a vehicle. The control device is configured to control an operation of a solar power generation device mounted in the vehicle. The control device includes an acquisition controller and an operation controller. The acquisition controller is configured to acquire a sunset time and a sunrise time at a current position of the vehicle. The operation controller is configured to switch an operation mode of the solar power generation device between a wakeup mode and a sleep mode having less power consumption of the solar power generation device than in the wakeup mode. The operation controller is configured to switching from the sleep mode to the wakeup mode based on the sunset time and the sunrise time.

With the control device according to the first aspect of the invention, it is possible to suppress switching of the operation mode of the solar power generation device from the sleep mode to the wakeup mode in the period of time at night based on the sunset time and the sunrise time. With this, it is possible to suppress the power consumption of the solar power generation system accompanied with the switching processing from the sleep mode to the wakeup mode in a period of time at night when sufficient power generation cannot be expected.

In the control device according to the first aspect of the invention, the operation controller may be configured to set, based on the sunset time, a first time when an operation of the sleep mode starts and set, based on the sunrise time, a second time when the operation of the sleep mode ends and an operation of the wakeup mode starts.

In the control device according to the first aspect of the invention, the operation controller may be configured to control the operation mode of the solar power generation device to the sleep mode in a period of time from the sunset time to the sunrise time.

According to the aspect of the invention, the operation in the sleep mode is continued in the period of time from the sunset time to the sunrise time, whereby it is possible to restrain the solar power generation device from being brought into a wakeup state regularly at night when sufficient power generation cannot be expected. Therefore, it is possible to considerably reduce the power consumption of the solar power generation system accompanied with the switching processing from the sleep mode to the wakeup mode in the period of time at night.

In the control device according to the first aspect of the invention, the operation controller may be configured to control the operation mode of the solar power generation device to the sleep mode in a period of time from a first time when a predetermined time has been traced back from the sunset time to a second time when a predetermined time has elapsed from the sunrise time.

According to the aspect of the invention, the operation in the sleep mode is continued in the period of time based on the first time and the second time with a margin of a predetermined time, whereby it is possible to restrain the solar power generation device from being brought into the wakeup state even at a time when sufficient power generation cannot be expected yet before the sunset time and after the sunrise time. Therefore, it is possible to effectively reduce the power consumption of the solar power generation system accompanied with the switching processing from the sleep mode to the wakeup mode.

In the control device according to the first aspect of the invention, the acquisition controller may be configured to acquire the sunrise time and the sunset time from the outside of the vehicle through communication equipment mounted in the vehicle or from a navigation device mounted in the vehicle. The acquisition controller may be configured to acquire a current position of the vehicle and current date and time from a GPS receiver or a navigation device mounted in the vehicle.

A second aspect of the invention relates to a control method that is executed by a control device for a vehicle and controls an operation of a solar power generation device mounted in the vehicle. The control method includes acquiring a sunset time and a sunrise time at a current position of the vehicle, switching an operation mode of the solar power generation device between a wakeup mode and a sleep mode having less power consumption of the solar power generation device than in the wakeup mode, and switching from the sleep mode to the wakeup mode based on the sunset time and the sunrise time.

With the control method according to the second aspect of the invention, it is possible to suppress switching of the operation mode of the solar power generation device from the sleep mode to the wakeup mode in the period of time at night based on the sunset time and the sunrise time. With this, it is possible to suppress the power consumption of the solar power generation system accompanied with the switching processing from the sleep mode to the wakeup mode in a period of time at night when sufficient power generation cannot be expected.

With the control device according to the first aspect of the invention and the control method according to the second aspect of the invention, it is possible to suppress power consumption with switching from the sleep mode to the wakeup mode in the solar power generation system at night when sufficient power generation cannot be expected.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a block diagram showing a configuration example of a solar power generation system including a control device according to an embodiment of the invention;
FIG. 2 is a flowchart illustrating a processing procedure of sleep period setting that the control device according to the embodiment of the invention executes; and
FIG. 3 is a flowchart illustrating a processing procedure of operation mode control that the control device according to the embodiment of the invention executes.

### DETAILED DESCRIPTION OF EMBODIMENTS

### Outline

A control device according to an embodiment that controls an operation of a solar power generation device mounted in a vehicle controls an operation mode of the solar power generation device to a sleep mode in a period of time at night from a sunset time to a sunrise time. With this, it is possible to suppress power consumption with switching from the sleep mode to a wakeup mode in the solar power generation system in a period of time at night when sufficient power generation cannot be expected.

### Configuration

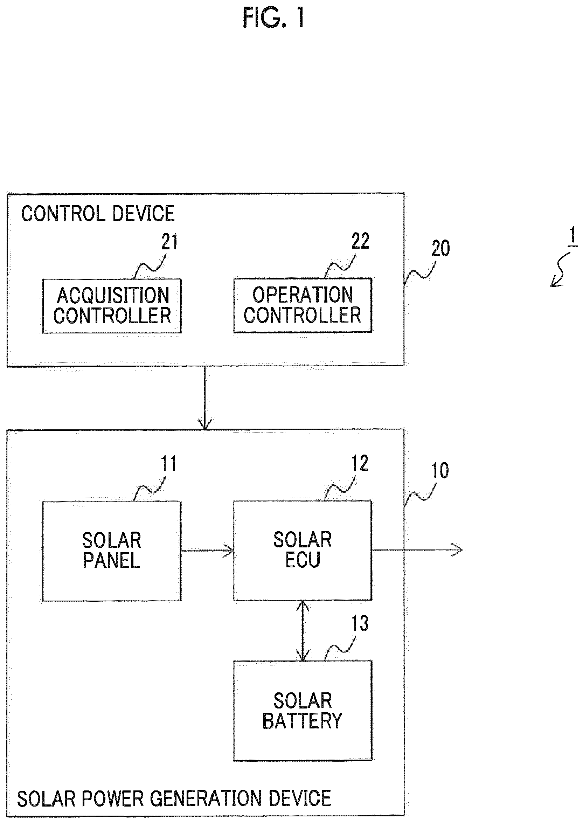

FIG. 1 is a diagram showing a configuration example of a solar power generation system 1 including a control device 20 according to an embodiment of the invention. The solar power generation system 1 illustrated in FIG. 1 has a configuration including a solar power generation device 10 and the control device 20. The solar power generation device 10 includes a solar panel 11, a solar ECU 12, and a solar battery 13. The control device 20 includes an acquisition controller 21 and an operation controller 22. The solar power generation system 1 is mounted in, for example, a vehicle or the like.

The solar panel 11 is a solar cell module that receives irradiation of sunlight and performs power generation. The amount of electric power generated by the solar panel 11 depends on solar radiation intensity. The solar panel 11 can be provided, for example, on a roof of the vehicle. Generated electric power of the solar panel 11 is output to the solar ECU 12.

The solar electronic control unit (ECU) 12 is a configuration for executing various kinds of control in the solar power generation device 10. The solar ECU 12 has a function of performing charging and discharging control as one of various control functions. The solar ECU 12 can convert the generated electric power of the solar panel 11 to a predetermined voltage to store the predetermined voltage in the solar battery 13 or can supply electric power stored in the solar battery 13 to a predetermined battery or load (not shown).

The solar ECU 12 has a power saving function as one of various control functions. The solar ECU 12 can switch and control the operation mode of the solar power generation device to a "wakeup mode" in which all functions of the solar ECU 12 are activated and operated and a "sleep mode" in which solely at least a part of the functions of the solar ECU 12 are operated and the remaining functions are stopped. In the operation in the sleep mode, since a part of the functions are stopped, power consumption is less than in the operation in the wakeup mode. The solar ECU 12 carries out switching of the operation mode based on an instruction from the control device 20. Switching of the operation mode will be described below.

The solar battery 13 is, for example, an electric power storage element to be chargeable and dischargeable, such as a lead storage battery or a nickel-hydrogen battery. The solar battery 13 is connected to the solar ECU 12 to be chargeable with the generated electric power of the solar panel 11 and dischargeable stored electric power to the battery or load (not shown).

The acquisition controller 21 is configured to be able to acquire a current position of the vehicle, the date of the day, a current time, a sunset time, and a sunrise time. The current position of the vehicle, the date of the day, and the current time can be acquired, for example, from an external information providing device (not shown) through a global positioning system (GPS) receiver (not shown) mounted in the vehicle. The sunset time and the sunrise time can also be acquired from the external information providing device (not shown) through wireless communication equipment (not shown) mounted in the vehicle. Alternatively, annual data may be stored in an in-vehicle memory (not shown) or the like in advance in a map format, and needed data may be extracted.

Then, the acquisition controller 21 executes processing for correcting date and time information of a timepiece (not shown) incorporated in the control device 20 based on the acquired current position of the vehicle, the date of the day, the current time, the sunset time, and the sunrise time, and processing for setting a time when the sleep mode starts and a time when the sleep mode ends. These kinds of processing will be described below.

The operation controller 22 is configured to be able to control the operation mode of the solar power generation device 10. Specifically, the operation controller 22 executes control for switching between the operation in the wakeup mode and the operation in the sleep mode based on a predetermined state of the solar power generation device 10. As the predetermined state of the solar power generation device 10, the amount of generated electric power of the solar panel 11 can be used. The operation controller 22 can switch the operation mode of the solar power generation device 10 to the wakeup mode when the amount of generated electric power is equal to or greater than a predetermined value and to the sleep mode when the amount of generated electric power is less than the predetermined value. The predetermined value can be set to, for example, electric power that is consumed with switching from the sleep mode to the wakeup mode in the solar power generation device 10 in order to process the generated electric power of the solar panel 11.

The operation controller 22 can control switching from the sleep mode to the wakeup mode in a period of time at night based on a sleep start time and a sleep end time set by the acquisition controller 21. The processing will be described below.

### Control That Is Executed by Control Device

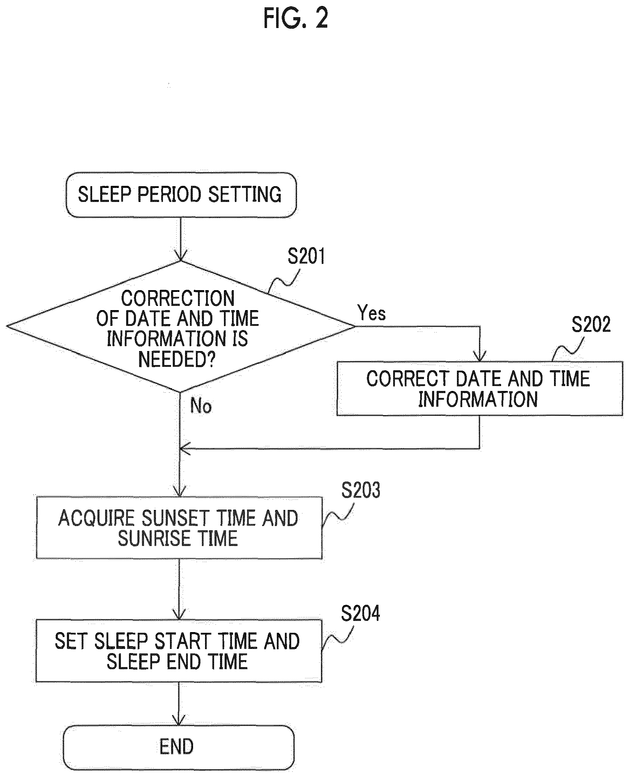

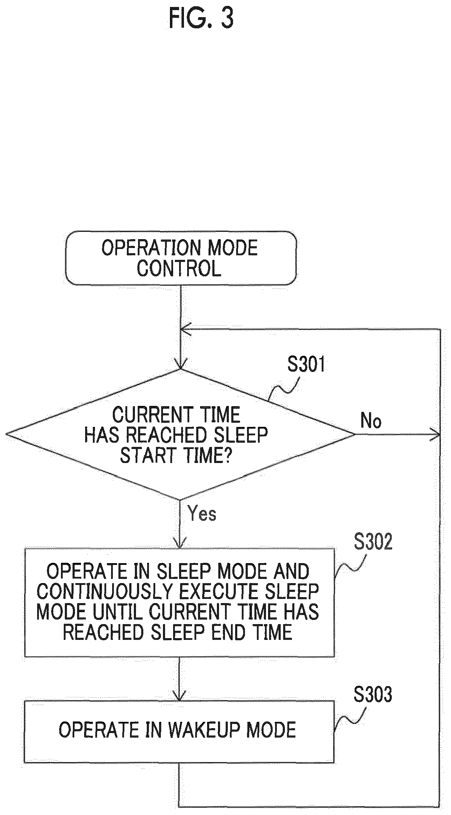

Next, control that is executed by the control device 20 according to the embodiment will be described further referring to FIGS. 2 and 3. FIG. 2 is a flowchart illustrating a processing procedure of sleep period setting that is executed by the acquisition controller 21 of the control device 20 according to the embodiment. FIG. 3 is a flowchart illustrating a processing procedure of operation mode control that is executed by the operation controller 22 of the control device 20 according to the embodiment.

First, the processing of the sleep period setting shown in FIG. 2 is started according to the occurrence of an event, for example, when an ignition switch is switched from an on state (IG_ON) to an off state (IG OFF), when plug-in charging ends, when charging of a high-voltage battery with generated solar electric power ends, or the like.

Step S201: Determination is made whether or not there is a need to correct the date and time information of the timepiece (not shown) incorporated in the control device 20. As a case where there is a need to correct the date and time information, for example, a case where deviation between the date and time of the timepiece incorporated in the control device 20 and the date and the time acquired through the GPS receiver (not shown) is large to a certain degree, or the like is considered. When determination is made that there is a need to correct the date and time information (S201, Yes), the process progresses to Step S202, and when determination is made that there is no need to correct the date and time information (S201, No), the process progresses to Step S203.

Step S202: The date and time information of the timepiece incorporated in the control device 20 is corrected. For example, the date and the time of the timepiece incorporated in the control device 20 are made to coincide with the date and the time acquired through the GPS receiver to be reference date and time, or the like.

The date and time information may be acquired from the in-vehicle navigation device (not shown). However, in this case, in order to set the date and the time of the navigation device to the reference date and time, while the navigation device has an automatic timepiece setting function, when the function is not provided, there is a need to appropriately make the user execute timepiece setting.

Step S203: A "sunset time" of today and a "sunrise time" of tomorrow are acquired. The sunset time and the sunrise time can be acquired from the external information providing apparatus, the in-vehicle memory (not shown), or the like described above.

Step S204: A period of time when the solar power generation device 10 is continuously operated in the sleep mode is set. Specifically, a first time (hereinafter, referred to as a "sleep start time") when the operation in the sleep mode starts is set based on the sunset time, and a second time (hereinafter, referred to as a "sleep end time") when the operation in the sleep mode ends and the operation in the wakeup mode starts is set based on the sunrise time.

In the setting, the sunset time may be set as the sleep start time as it is, and the sunrise time may be set as the sleep end time as it is. In the setting, it is possible to restrain the solar power generation device 10 from being brought into a wakeup state at a time when power generation cannot be expected. A time when a predetermined time has been traced back from the sunset time may be set as the sleep start time, and a time when a predetermined time has elapsed from the sunrise time may be set as the sleep end time. In the setting, it is possible to restrain the solar power generation device 10 from being brought into the wakeup state even at a time when power generation cannot be expected yet before the sunset time and after the sunrise time. When points (coordinate data) of the acquired sunset time and sunrise time are away from the current position (coordinate data) of the vehicle, time obtained by correcting a time difference based on the distance may be set as the sleep start time and the sleep end time.

When the sleep start time and the sleep end time are set, the processing of the sleep period setting is completed.

The correction processing of the date and time information in Steps S201 and S202 of FIG. 2 described above does not need to be executed in the processing of the sleep period setting, and may be executed at any time when the ignition switch is in the on state, or the like. However, as shown in FIG. 2, the date and time information is corrected immediately before the sleep start time and the sleep end time are set, whereby it is possible to reduce time deviation from the reference time.

Next, the processing of the operation mode control shown in FIG. 3 is started when the solar power generation system 1 operates, for example, with power-on or the like, and is repeatedly executed at each predetermined time until the solar power generation system 1 is stopped, for example, with power-off or the like. While detailed description will be omitted, control for switching the operation mode of the solar power generation device 10 to any one of the wakeup mode and the sleep mode is executed based on the amount of generated electric power of the solar panel 11 in the solar power generation device 10 in parallel with the processing of FIG. 3.

Step S301: Determination is made whether or not the current time has reached the sleep start time. When determination is made that the current time has reached the sleep start time (S301, Yes), the process progresses to Step S302, and when determination is made that the current time has not reached the sleep start time (S301, No), the process returns to Step S301 and determination is made whether or not the current time has reached the sleep start time.

Step S302: The solar power generation device 10 is operated in the sleep mode. When the operation mode being executed currently is the wakeup mode, the operation mode is switched to the sleep mode, and when the operation mode being executed currently is the sleep mode, the sleep mode is continuously executed. With the processing, switching from the sleep mode to the wakeup mode is limited in a period of time at night. Then, the sleep mode is continuously executed until the current time reaches the sleep end time.

Step S303: The sleep mode ends, and the solar power generation device 10 is operated in the wakeup mode. Thereafter, the process returns to Step S301, and determination is made whether or not the current time has reached the sleep start time.

### Operations and Effects of Embodiment

With the control device 20 according to the embodiment of the invention described above, it is possible to control switching of the operation mode of the solar power generation device 10 from the sleep mode to the wakeup mode in the period of time at night based on the sunset time and the sunrise time. With this, it is possible to suppress the power consumption of the solar power generation device 10 with switching processing from the sleep mode to the wakeup mode in the period of time at night when sufficient power generation cannot be expected.

With the control device 20 according to the embodiment, the operation mode of the solar power generation device 10 is controlled to the sleep mode in the period of time from the sunset time to the sunrise time or the operation mode of the solar power generation device 10 is controlled to the sleep mode in a period of time from the first time when the predetermined time has been traced back from the sunset time to the second time when the predetermined time has elapsed from the sunrise time, whereby it is possible to restrain the solar power generation device 10 from being brought into a wakeup state regularly at night when sufficient power generation cannot be expected. Therefore, it is possible to considerably reduce the power consumption of the solar power generation system 1 accompanied with the switching processing from the sleep mode to the wakeup mode in the period of time at night.

In the above-described embodiment, although an example where the control device 20 is constituted separately from the solar power generation device 10 has been described, the control device 20 may be included in the solar power generation device 10. In this case, the control device 20 may be incorporated as one function of various kinds of control of the solar ECU 12.

The control device according to the embodiment of the invention is usable when the operation of the solar power generation device mounted in the vehicle is controlled.

## Claims

1. A control device (20) for a vehicle, the control device (20) being configured to control an operation of a solar power generation device (10) mounted in the vehicle, the control device (20) comprising:
an acquisition controller (21) configured to acquire a sunset time and a sunrise time at a current position of the vehicle; and
an operation controller (22) configured to switch an operation mode of the solar power generation device (10) between a wakeup mode and a sleep mode having less power consumption of the solar power generation device (10) than in the wakeup mode,
wherein the operation controller (22) is configured to switch from the sleep mode to the wakeup mode based on the sunset time and the sunrise time.

2. The control device (20) according to claim 1, wherein the operation controller (22) is configured to set, based on the sunset time, a first time when an operation of the sleep mode starts and set, based on the sunrise time, a second time when the operation of the sleep mode ends and an operation of the wakeup mode starts.

3. The control device (20) according to claim 1 or 2, wherein the operation controller (22) is configured to control the operation mode of the solar power generation device (10) to the sleep mode in a period of time from the sunset time to the sunrise time.

4. The control device (20) according to claim 1, wherein the operation controller (22) is configured to control the operation mode of the solar power generation device (10) to the sleep mode in a period of time from a first time when a predetermined time has been traced back from the sunset time to a second time when a predetermined time has elapsed from the sunrise time.

5. The control device (20) according to any one of claims 1 to 4, wherein the acquisition controller (21) is configured to acquire the sunrise time and the sunset time from the outside of the vehicle through communication equipment mounted in the vehicle or from a navigation device mounted in the vehicle.

6. The control device (20) according to any one of claims 1 to 4, wherein the acquisition controller (21) is configured to acquire a current position of the vehicle and current date and time from a GPS receiver or a navigation device mounted in the vehicle.

7. A control method that is executed by a control device (20) for a vehicle and controls an operation of a solar power generation device (10) mounted in the vehicle, the control method comprising:
acquiring a sunset time and a sunrise time at a current position of the vehicle;
switching an operation mode of the solar power generation device (10) between a wakeup mode and a sleep mode having less power consumption of the solar power generation device (10) than in the wakeup mode; and
switching from the sleep mode to the wakeup mode based on the sunset time and the sunrise time.
